# EUROPÄISCHE PATENTSCHRIFT

(11) **EP 2 381 561 B1**
(45) Veröffentlichungstag und Bekanntmachung des Hinweises auf die Patenterteilung: **28.07.2021**
(21) Anmeldenummer: 11173378.8
(22) Anmeldetag: 16.09.2005
(51) Int. Cl.: H02K 1/18, H02K 1/27, H02K 15/00, H02K 15/02, H02K 1/14, H02K 7/18, H02K 1/30

(54) **Windkraftanlage mit einem Generator**
Wind energy assembly with a generator
Eolienne dotée d'un générateur

(30) Priorität: 20.09.2004 IT BZ20040047
(43) Veröffentlichungstag der Anmeldung: 26.10.2011
(62) Teilanmeldung aus: 05790091.2
(73) Patentinhaber: WINDFIN B.V., 2451 VW Leimuiden (NL)
(72) Erfinder: Pabst, Otto, 39037 Rio Pusteria (IT); Lercher, Michael, 6150 Steinach (AT)
(74) Vertreter: Bergadano, Mirko

(56) Entgegenhaltungen:
- EP-A2- 0 313 392
- WO-A1-03/073591
- WO-A2-00/28638
- DE-A1- 10 210 071
- US-A1- 2002 089 251
- None

## Beschreibung

Die vorliegende Erfindung bezieht sich auf einer Windkraftanlage mit einem Generator umfassend ein Lager, einen am Lager festliegenden Ringstator, einen gegenüber dem Ringstator umlaufenden Rotor und mit dem Rotor, verbundene Betätigungsmittel, Permanentmagnete und Wicklungen, die jeweils an gegenüberliegenden Flächen des Ringstators und des Rotors, angeordnet sind; der Rotor und der Ringstator durch in Axialrichtung verlaufende Schnitte in einzelne Sektoren unterteilt sind, die aneinander anliegend angeordnet sind; wobei jeder Sektor des Stators mindestens eine Wicklung umfasst, wobei die Wicklungen als Einzelwicklungen in der Form von Zahnspulen ausgeführt sind; und wobei jeder Sektor des Rotors mindestens einem Permanentmagneten umfasst.

Bei derartigen Windkraftanlagen besteht das schwerwiegende Problem, dass sowohl die Permanentmagneten als auch die Wicklungen schwierig zu warten und reparieren sind, sodass in den meisten Fällen der Generator vollständig abgenommen werden muss, sowohl um zur Fehlerstelle oder zum zu wartenden Teil Zugang zu finden als auch um geradezu den kompletten Stator oder Rotor abzunehmen, um ihn in die Werkstatt zu bringen und zu reparieren oder zu warten.

So ist in der internationalen Patentanmeldung WO 2004/017497 A1 ein Windkraftanlagegenerator beschrieben, wo eine einfache Montage und Demontage von einzelnen Generatorbestandteilen möglich ist. In diesem Fall ist jedoch nur eine besondere Anordnung von ringförmigen Wicklungen und dieselben Anker vorgesehen, die nacheinander angeordnet sind, es wird jedoch kein Hinweis dazu gegeben, wie das Problem des Generators mit den Merkmalen des Oberbegriffes gelöst werden könnte.

Aufgabe der vorliegenden Erfindung ist daher eine Windkraftanlage der oben angegebenen Art bereitzustellen, die einfach montiert und repariert und gewartet sein kann, indem ein Generator ausgeführt wird, der am Ort leicht zugänglich ist, wo die Notwendigkeit einer Reparatur oder Wartung besteht.

WO 03/003541 offenbart einen Elektromotor mit den Merkmalen des Oberbegriffs des Anspruchs 1. WO 03/073591 A1 offenbart einen Synchrongenerator. US 2002/089251 A1 offenbart einen motor.

Diese Aufgabe wird durch eine Windkraftanlage mit den Merkmalen des kennzeichnenden Teils des Anspruchs 1 gelöst.

In einer anderen bevorzugten Ausführungsform bei der mindestens eine Permanentmagnet und die Wicklung jeweils an einer Basis angeordnet sind, die mit einem Schwalbenschwanzförmigen Profil versehen ist die mit einem Fenster des Statorenrings/Rotorenrings eingreift.

Weitere Vorteile des Generators/Elektromotors gemäss der Erfindung gehen aus den Patentansprüchen und aus der folgenden Beschreibung einer bevorzugten, in der beigefügten Zeichnung dargestellten Ausführungsform hervor. Es zeigen:

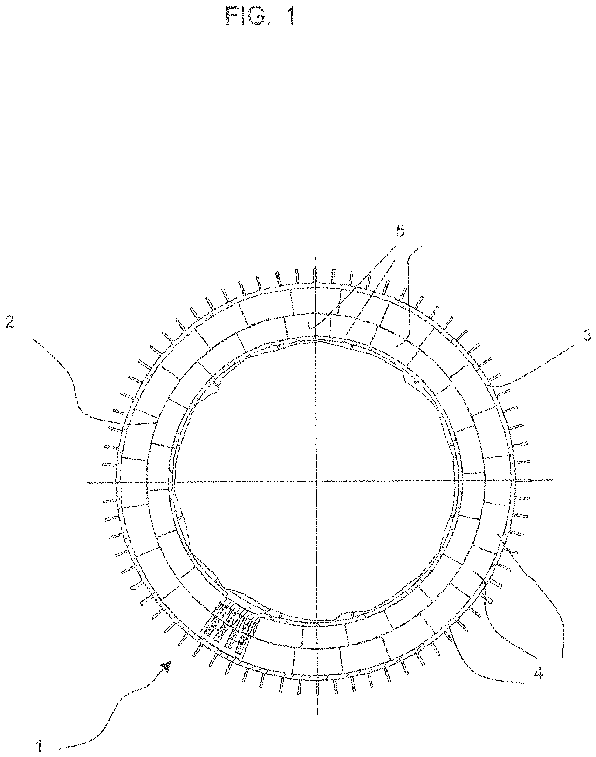

Figur 1 eine Ansicht in Axialrichtung eines erfindungsgemäßen Generators, und

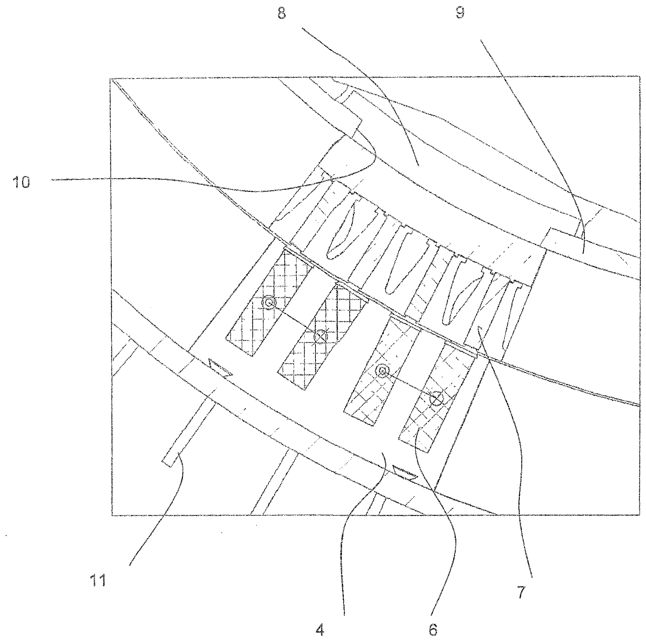

Figur 2 eine schematische, vergrößerte Einzelheit aus Figur 1.

Wie in den Figuren gezeigt, ist mit der Bezugsziffer 1 insgesamt ein erfindungsgemäßer Generator/Elektromotor dargestellt.

Dieser umfasst einen Ringstator 3 und einen Ringrotor 2.

Der Ringstator 3 ist in eine Vielzahl von Sektoren 4 unterteilt, wahrend der Rotor 2 in eine Vielzahl von Sektoren 5 unterteilt ist.

Jede Sektor 4 umfasst mindestens eine Wicklung 6, im vorliegenden Fall zwei, die als Zahnspule ausgeführt sind.

Die Permanentmagneten 7 sind in den Sektoren 5 aufgenommen.

Gemäss der Erfindung sind mindestens ein Permanentmagnet 7, im vorliegenden Fall vier Permanentmagnete 7, an einer schwalbenschwanzförmigen Basis 8 angeordnet, die im Rohrring 9 des Rotors 2 über ein Fenster 10 eingreift, das sich in Axialrichtung derart erstreckt, dass ein Sektor 5 stirnseitig ausgezogen werden kann.

Zweckmäßiger Weise ist die Außenfläche des Generators mit Kühlrippen 11 versehen.

## Patentansprüche

1. Windkraftanlage mit einem Generator umfassend
ein Lager,
einen am Lager festliegenden Ringstator (3),
einen gegenüber dem Ringstator (3) umlaufenden Rotor (2) und mit dem Rotor (2), verbundene Betätigungsmittel, Permanentmagnete und Wicklungen, die jeweils an gegenüberliegenden Flachen des Ringstators (3) und des Rotors (2), angeordnet sind,
der Rotor (2) und der Ringstator (3) durch in Axialrichtung verlaufende Schnitte in einzelne Sektoren (4,5) unterteilt sind, die aneinander anliegend angeordnet sind; wobei jeder Sektor (4) des Stators (3) mindestens eine Wicklung (6) umfasst, wobei die Wicklungen (6) als Einzelwicklungen in der Form von Zahnspulen ausgeführt sind; und wobei jeder Sektor (5) des Rotors (2) mindestens einen Permanentmagneten umfasst; wobei jeder Sektor (4,5) verschiebbar ist, um einen einzelnen Sektor (4,5) in Axialrichtung einzubringen oder auszuziehen; und der Rotor (2) ein Rotorring ist und einen Rohrring (9) aufweist.

2. Windkraftanlage nach Anspruch 1, wobei der mindestens eine Permanentmagnet (7) an einer Basis (8) angeordnet ist, die mit einem schwalbenschwanzförmigen Profil versehen ist, das in ein Fenster (10) des Rotorrings eingreift.

## Claims

1. Wind turbine with a generator comprising a bearing,
an annular stator (3) fixedly mounted on the bearing,
a rotor (2) circulating with respect to the annular stator (3) and actuation means connected to the rotor (2), permanent magnets and windings which are each arranged on opposing surfaces of the annular stator (3) and of the rotor (2),
the rotor (2) and the annular stator (3) are divided into individual sectors (4, 5) by segments running in the axial direction which are arranged resting on one another; wherein each sector (4) of the stator (3) comprises at least one winding (6), wherein the windings (6) are configured as individual windings in the form of toothed coils; and wherein each sector (5) of the rotor (2) comprises at least one permanent magnet;
wherein each sector (4, 5) is displaceable in order to introduce or remove an individual sector (4, 5) in the axial direction; and the rotor (2) is a rotor ring and has a pipe ring (9).

2. Wind turbine according to claim 1, wherein the at least one permanent magnet (7) is arranged on a base (8) which is provided with a dovetail-shaped profile which engages into a window (10) of the rotor ring.

## Revendications

1. Centrale éolienne dotée d'un générateur comprenant
un roulement,
un stator annulaire (3) fixé au roulement,
un rotor (2) entourant le stator annulaire (3) et des moyens d'actionnement reliés au rotor (2),
des aimants permanents et des enroulements, lesquels sont respectivement disposés sur des surfaces opposées du stator annulaire (3) et du rotor (2),
le rotor (2) et le stator annulaire (3) sont divisés en secteurs individuels (4, 5) par des fentes dirigées dans la direction axiale, lesquels sont disposés de manière contiguë l'un à l'autre ; dans laquelle chaque secteur (4) du stator (3) comprend au moins un enroulement (6), dans laquelle les enroulements (6) sont réalisés, en tant qu'enroulements individuels, sous la forme de bobines dentées; et dans laquelle chaque secteur (5) du rotor (2) comprend au moins un aimant permanent; dans laquelle chaque secteur (4, 5) peut coulisser afin d'enfoncer ou de rétracter un secteur individuel (4, 5) dans la direction axiale ; et le rotor est une bague de rotor et comporte une bague tubulaire (9).

2. Centrale éolienne selon la revendication 1, dans laquelle l'au moins un aimant permanent (7) est disposé sur une base (8), laquelle est prévue avec un profil en queue d'aronde, lequel entre en prise dans une fenêtre (10) de la bague de rotor.
